Europäisches Patentamt

European Patent Office

Office européen des brevets

(11) Publication number: **0 209 148**
**A2**

## (12) EUROPEAN PATENT APPLICATION

(21) Application number: 86109878.8

(22) Date of filing: 18.07.86

(51) Int. Cl.⁴ **B65D 75/66**

(30) Priority: 19.07.85 JP 158383/85

(43) Date of publication of application:
21.01.87 Bulletin 87/04

(84) Designated Contracting States:
DE FR GB IT SE

(71) Applicant: **HONSHU SEISHI KABUSHIKI KAISHA**
**12-8, Ginza 5-chome Chuo-ku**
**Tokyo 104(JP)**

(72) Inventor: **Tsuchiya, Mikio**
**756-11, Tabeta-cho**
**Chiba-shi Chiba-ken 280-01(JP)**

(74) Representative: **Riederer Freiherr von Paar zu Schönau, Anton**
**Freyung 615 Postfach 2664**
**D-8300 Landshut(DE)**

(54) **Easily openable shrink package and method for producing same.**

(57) Described herein is an easily openable shrink package (1) employing a pliable thread (4) as a package opener. The opener thread (4) is securely bonded on the inner surface of a thermally shrinkable film (2) which wraps in an article (3) to be packaged. Upon shrinking the film (2) in a heating atmosphere, the opener thread (4) is contacted length-wise in a degree commensurate with the shrinkage of the film (2) by flexing deformations in radial directions. A packaging method for producing such easily openable shrink packages is also disclosed herein.

FIG. 1

Xerox Copy Centre

EP 0 209 148 A2

## EASILY OPENABLE SHRINK PACKAGE AND METHOD FOR PRODUCING SAME

<BACKGROUND OF THE INVENTION>

Field of the Invention

This invention relates to a readily openable thermo-shrinking film package (hereinafter referred to simply as "shrink package" for brevity) and a method for producing same.

Description of the Prior Art

Thermo-shrinking synthetic resin films - (hereinafter referred to as "shrink films" for brevity) have been widely used for separately packaging various articles or for collectively packaging a multitude of articles into units for transportation or other purposes. The packages of this sort are increasingly used, particularly for packaging food products such as confectioneries and instant noodles and pharmaceutical products since they appeal high reliability for safety to the consumer because of the virginity of packaged products in addition to excellent transparency and aesthetic appearance.

Nevertheless, the shrink packages commonly have a problem that it is difficult to open a package by breaking the shrink film which tightly fits on the outer surfaces of a wrapped article. In order to eliminate this inconvenience, current shrink packages are usually provided with one of the following easy-open type unwrapping means.

Namely, it has been the general practice: (1) to provide a perforated cut line; (2) to adhere a ripper ribbon on and along a slit (a cut line) formed in a shrink film; or (3) to attach a shrinkable cut tape on the inner surface of a wrapping film.

However, the above-mentioned method (1) resorting to a perforated cutting line more or less impairs the appearance of packages. In addition, since the perforations are formed before shrinking the film, there often occurs a problem that the perforated cutting line is deviated from a predetermined position on the package depending upon the condition of the wrapped article. Further, there are possibilities of the shrink films rupturing spontaneously from a perforated portion when handling the packages.

For controlling the velocity of film shrinkage in the heat-shrinking stage, the existing shrink packaging methods generally utilize the phenomenon of air expansion which takes place between a film and an article wrapped in the film, while adjusting the heating temperature. In case of a perforated film, however, such control of shrinkage velocity is rendered difficult by the escape of air through the perforations in the film.

On the other hand, the method (2) which necessitates provision of a ripper ribbon separately in addition to a slit is disadvantageous in that it complicates the packaging process and lowers the productivity, coupled with a practical problem that only part of the film is ripped off when opening a package.

The method (3) using a cut tape which itself is thermally shrinkable suffers from a problem of premature shrinkage of the tape, which is caused by the heat of an adhesive or bonding agent when attaching it to a shrink film, failing to serve for the intended purpose. A special treatment is necessary to prevent such premature shrinkage. On the other hand, the use of cut tapes involves a troublesome job of cutting a wide sheet into narrow strips. Besides, since an adhesive or bonding agent has to be applied on one face of each cut tape, the packaging process becomes more complicated by addition of the adhesive applying step. Owing to various limitations imposed on the properties of the cut tape, e.g., capability of shrinking at a lower temperature than the shrink film, it has to be formed from a special material, which will be reflected by a substantial increase in cost. Under these circumstances, the conventional cut tapes are used for shrink packages of relatively expensive goods, but not for inexpensive articles such as drop candies, cup noodles, lactic drinks and so forth.

<SUMMARY OF THE INVENTION>

The present invention aims at the elimination of the above-mentioned drawbacks or problems of the conventional shrink package opener means.

More specifically, it is an object of the present invention to provide a shrink package with an opener means which can be formed from an inexpensive material by a simple operation, without necessitating to use a cut tape or to form perforations or a slit in the shrink film.

It is another object of the present invention to provide a packaging method for producing the just-mentioned shrink package with a simple and inexpensive opener means.

In accordance with the present invention, the above-mentioned objects are achieved by employing, in place of a cut tape, a package opener of a pliable or flexible threadlike material which can vary its apparent length commensurate with the shrinkage of the film to which the opener is attached, for example, a single yarn, a doulbed and twisted yarn or a thread of natural, synethic, semi-synthetic or regenerated fiber, or a thread consisting of a crimped or uncrimped filament or filaments of synthetic fiber solely or in combination with the just-mentioned yarn or thread. In this context, the terms "yarn" or "thread" are intended to also comprise equivalent structures.

An easily openable shrink package free of the above-mentioned drawbacks can be obtained simply by wrapping an article in a shrink film which has the opener thread adhered or bonded on its inner surface already prior to thermally shrinking the film.

According to the present invention, there is also provided a packaging method for obtaining the above-mentioned easily openable shrink package. Namely, in a shrink packaging process, the method comprises the steps of continuously feeding an opener thread toward a continuous strip of a shrink film which is being withdrawn from a roll, bonding the opener thread on the inner surface of the film, and, after integrally securing the opener thread to the film, successively wrapping in the film the articles to be packaged. Then, opposite side edges of the film are sealed between the wrapped articles by a side seal or by a center seal, simultaneously heat-cutting the sealed portions or cutting apart the wrapped articles by a cutter after sealing. The separate packages are then put in a heating atmosphere to shrink the film, obtaining the above-described easily openable shrink packages. The advantages accruing from the use of the afore-mentioned crimped or uncrimped yarn, thread or filament, which is used as a package opener in the present invention, will be explained in detail hereinafter in connection with preferred embodiments. Briefly, it is available far more easily than the shrinkable tape-like film strips which have been conventionally used on shrink packages, and it has a property of shrinking its length commensurate with the degree of shrinkage of a thermally shrinkable material to which the thread is attached. More particularly, the afore-mentioned single yarn, doubled and twisted yarn or crimped yarn or thread undergoes flexing deformations in the radial directions on shrinkage of the film on which the yarn is fixed, increasing its apparent thickness correspondingly to the reduction in its length. As a result, it shrinks to the same degree as the shrink film. The present invention has succeeded in solving the afore-mentioned technical problems by the use of such function or property of a pliable thread or yarn.

The above and other objects, features and advantages of the invention will become apparent from the following description and the appended claims, taken in conjunction with the accompanying drawings which show by way of example some preferred embodiments of the invention.

<BRIEF DESCRIPTION OF THE DRAWINGS>

In the accompanying drawings:

Fig. 1 is a schematic perspective view of a shrink package embodying the present invention:

Figs. 2A and 2B are schematic sectional views of a shrink film attached with an opener thread, showing the conditions of the opener thread before and after shrinking the film. respectively;

Figs. 3A and 3B are views similar to Figs. 2A and 2B but showing an opener of a different thread;

Fig. 4 is a schematic perspective view of a packaging apparatus suitable for carrying out the method according to the invention;

Fig. 5 is a schematic view of an adhesive applicator employed by the packaging apparatus of Fig. 4;

Fig. 6 is an enlarged sectional view of a heat-sealer with a cutter;

Fig. 7 is a schematic plan view of chained packages being heat-sealed and cut by the heat-sealer;

Fig. 8 is a schematic side view of another packaging apparatus suitable for carrying out the method of the invention;

Fig. 9 is an enlarged schematic view around a transverse seal of the shrink package according to the invention; and

Fig. 10 is a schematic perspective view of another embodiment of the shrink package according to the invention, which is provided with a tab slit.

<DESCRIPTION OF PREFERRED EMBODIMENTS>

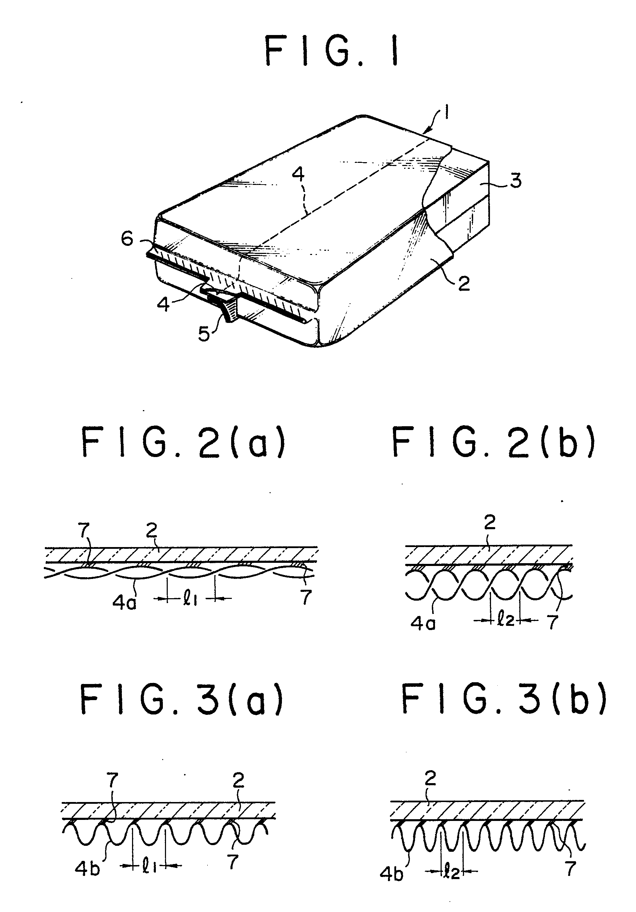

Referring to the accompanying drawings and first to Fig. 1, there is shown an embodiment of the shrink package according to the invention. The shrink package which is generally indicated by the reference numeral 1 wraps an article 3 in a shrink film 2 which has been shrunk to fit tightly on the outer surfaces of the article 3. In the particular example shown, an opener thread 4 is attached intimately to the inner surface of the film 2 along a center line on the upper surface of the packaged article 3 in the manner as will be described in detail hereinlater. Indicated at 5 is a vertical seal portion which is formed when the opposite side edges of the packaging film are joined by a center seal, and at 6 is a transverse seal which is formed at the fore and rear ends of each package casing.

The opener thread 4 to be attached to a heat-shrinking material like the shrink film 2 of the package may be of any kind as long as it has a property of shrinking together with the heat-shrinking material to which it is secured.

Examples of pliable thread-like materials useful for the opener thread are as follows.

(1) Single yarn or doubled and twisted yarn consisting of staples and/or filaments of natural, synthetic, semi-synthetic or regenerated fiber;

(2) Crimped monofilament of synthetic, semi-synthetic or regenerated fiber;

(3) Crimped single yarn or doubled and twisted yarn as mentioned in (1) above; and

(4) A braided string of the yarns in (1) to (3).

According to the present invention, the opener thread is formed from a suitable one of the above-mentioned various materials, preferably from synthetic resin fiber including polyester, nylon or polyvinyl alcohol fibers. More specifically, the opener thread may be any one of sewing threads (of a single yarn or a doubled and twisted yarn) such as hand-sewing threads and cotton threads, with or without crimping. When attached on a heat-shrinking film, these threads behave to shorten their apparent lengths in a degree commensurate with the shrinkage of the film.

It is also possible to braid or twist a plural number of the above-mentioned threads to obtain an opener thread with a greater strength suitable for use in combination with a thicker shrink film for packages of large-size articles. Since the above-mentioned opener threads all have a higher tensile strength than shrink films in general, the packaging film can be torn off easily in any case by pulling one end of the opener thread.

Now, the manner of attaching the opener thread to a film and its behavior on film shrinkage are explained with reference to Figs. 2 and 3. As will be described hereinlater, the opener thread 4 is secured to a shrink film 2 by means of an adhesive or a bond 7 (which will be collectively referred to as "adhesive" hereinlater). The opener thread, which consists of, for example, a twisted thread 4a or a crimped thread 4b is adhered to a film surface at a multitude of discrete points in a micrographic observation and not rigidly fixed along the entire length of the thread, as shown in Figs. 2A and 3A. However, even if an adhesive 7 is applied on the entire surface of the opener thread, which is bulky by its own nature internally containing tufts of filaments or monofibers, bonded surface portions 7 of the thread act to reduce its apparent length upon shrinking the film 2. Namely, the filaments of the thread are bulged radially outward as shown in Fig. 2B or the crimped thread is folded to increase the crimp density as shown in Fig. 3B, thereby reducing the effective length of the thread as a whole. Consequently, the opener thread itself is contracted in length according to the degree of shrinkage of the film 2.

There are no particular restrictions on the kind of the shrink film, which may be selected from generally used materials, more specifically, from known synthetic resin films imparted with heat-shrinking property, for example, of polyethylene, polyvinyl chloride, polyester, polypropylene and the like, including both mono- and bi-axially stretched films.

As is clear from the foregoing description, the present invention succeeds in incorporating a very effective opener means into shrink packages by the use of a unique behavior of a thread on a shrinking film.

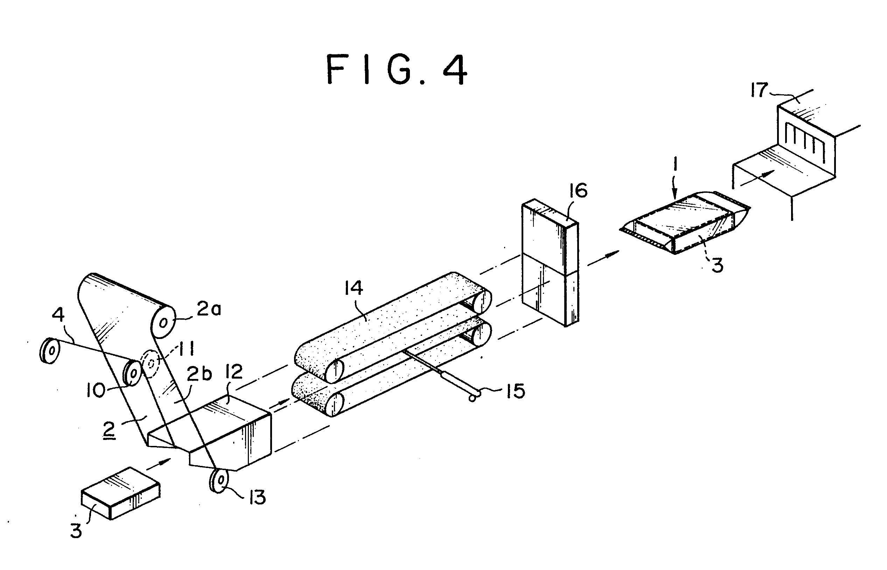

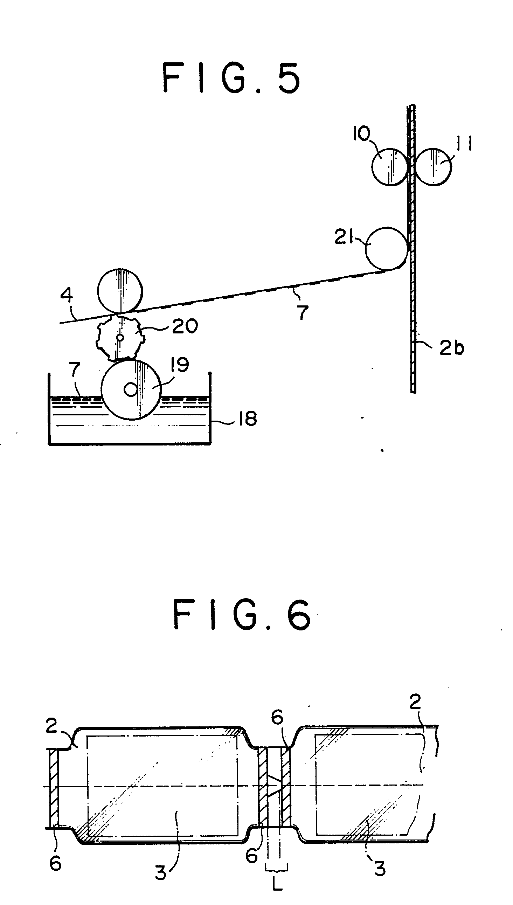

Referring now to Fig. 4, there is illustrated a method for producing the above-described shrink package of the invention. In Fig. 4, indicated at 2a is a roll of shrinkable polyethylene film 2b which is continuously fed toward a folder 12, while an opener thread 4 of crimped and twisted polyester yarn is unreeled at the uniform speed with the film 2 and adhered to the inner surface (the lower side in the drawing) of the film 2. The opener thread, which is applied with a hot melt of an ethylene vinyl acetate type adhesive or the like in a previous stage as will be described hereinlater with reference to Fig. 5 which illustrates an adhesive applicator, is continuously adhered to a predetermined position on the inner surface of the film by a press roller 10 working in cooperation with a backing roller 11. The strip of film is then fed into the folder 12 in which the film is successively wrapped around articles to be packaged, and the opposite side edges of the film are overlapped into a tubular form and center-sealed by a sealer 13. Denoted at 14 is a carrier belt which is internally provided with a position controller 15 thereby to synchronize the transfer speed of the wrapped articles with the operation of a heat-sealer 16 located in a downstream position on the line. The wrapped articles coming out of the carrier belt 14 are successively passed through the heat-sealer 16, thereby cutting a connecting film portion intervening between adjacent package units to form separate and independently sealed packages each wrapping in an article in a casing of unshrunk film. Nextly, the articles wrapped in the respective casings are put in a heating atmosphere in a furnace 17, heating the casing of the polyethylene film to 140 - 150 C. As a result, the film is caused to shrink and fit tightly on the surfaces of the packaged article 3 to form a shrink package 1.

Fig. 5 illustrates an example for applying an adhesive to the opener thread. In the particular example shown, an adhesive is applied to the surface of an opener thread at intervals of approximately 3 -5 mm by means of a dip roll 19 which is dipped and rotated in a hot melt bath of the adhesive and a saw-tooth-like transfer roll 20 rotating in contact with the dip roll 19. Alternatively, the adhesive may be applied to the entire surface of the opener thread by the so-called "full-dip" method. In Fig. 5, the reference numeral 21 denotes a guide roller.

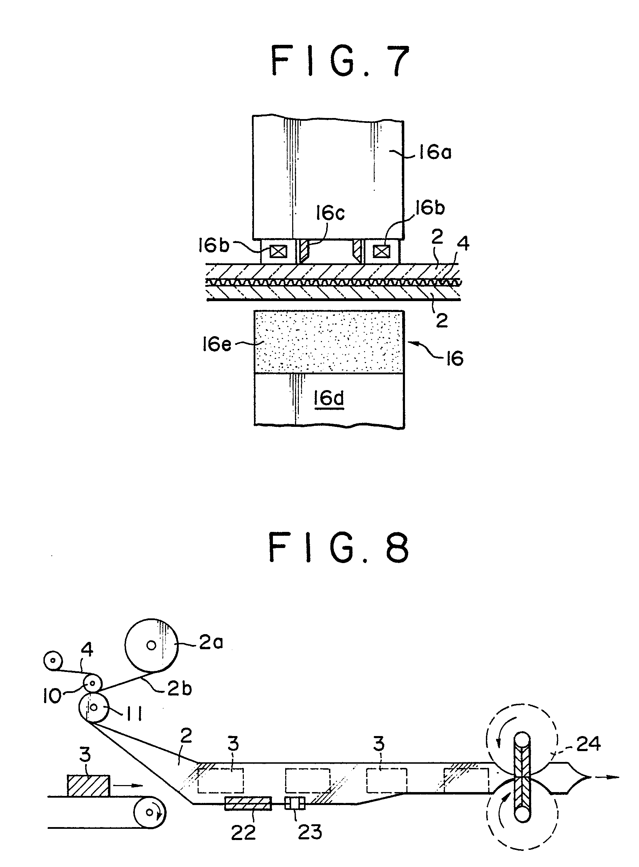

Shown in enlarged vertical section and plan view in Figs. 6 and 7 is the heat-sealer 16 which serves to cut and seal the respective casing units. In this figure, indicated at 16a is a movable upper plate which supports heaters 16b and cutter blades 16c on the lower side thereof for cooperation with a backing plate 16e on a lower support plate 16d. By operation of these components, the tubular film is cut into separate casing units along cut lines of the shapes indicated at L while forming a transverse seal along each end of the casing unit as shown in Fig. 7. The separate and sealed packages are put in a heating furnace in the manner as described hereinbefore.

In the heating furnace 17, the shrink film 2 of the package which encases the article 3 is thermally shrunk, and its shrinking force is transmitted to the opener thread of twisted yarns or the like through the bonded portions 7 in such a manner as to reduce the length of the thread. Consequently, the opener thread 4 which facilitates opening of the shrink package 1 is integrally and neatly held on the inner surface of the shrunk film without being loosened untidily.

Illustrated in Fig. 8 is another embodiment of the packaging method of the invention, in which the component parts common with Fig. 4 are designated by common reference numerals. The embodiment of Fig. 8 differs in that, instead of the center seal, a fin seal is formed by cooperation of a heater 22 and nip rolls 23, folding a continuous strip of film 2b into a tubular form and successively wrapping articles 3 therein. Designated at 24 is a rotary heater with cutter blades, by which the continuous tubular film is transversely sealed and cut into separate casing units at positions between the wrapped articles in the same manner as in the foregoing embodiment.

There are no particular restrictions with regard to the adhesive for securely bonding the opener thread 4 to the shrink film 2. For example, there may be employed: a hot melt type adhesive including an ethylene-vinyl acetate copolymer, a polyolefin-base adhesive, an ethylene-ethyl acetate copolymer and the like; an emulsion type adhesive including a vinyl acetate-base adhesive, an acrylic adhesive, a synthetic rubber latex-base adhesive and the like; or a solvent type adhesive of a thermoplastic resin including vinyl acetate and acrylic resins.

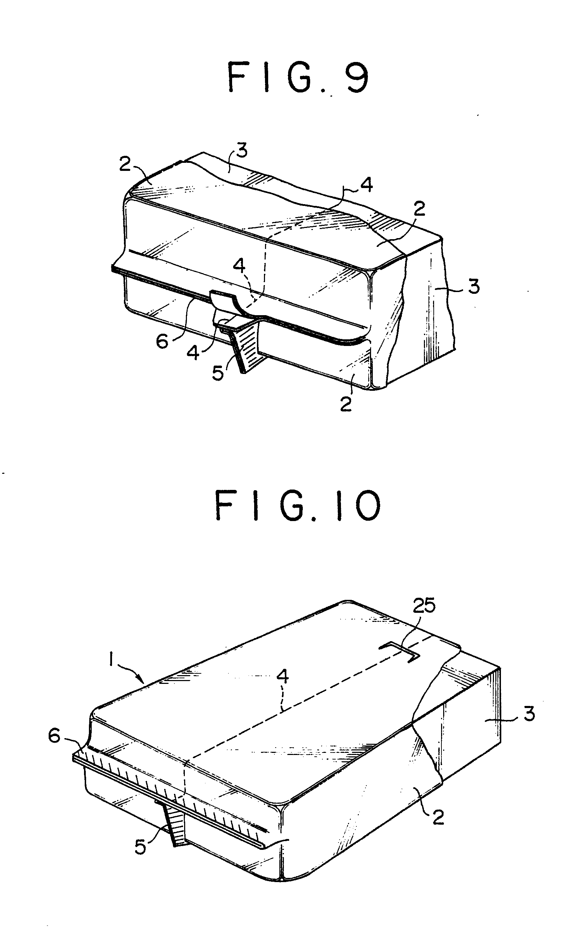

In the embodiment of Fig. 1, one end of the opener thread is gripped in one transverse seal 6 of the package 1 as shown on an enlarged scale in Fig. 9, the end of the thread being loosely held between the films 2 but not bonded to the latter. This transverse seal portion is formed when heat-cutting the continuous film as seen in Figs. 6 and 7, and gives an example of a seal which facilitates to unravel and pinch a pulling end of the opener thread. A pulling end of the opener thread may be laid on the inner side of a flap or pull tab 25 which is formed by cutting a U-shaped slit in the film across the opener thread on the upper side of the package 1 as shown particularly in Fig. 10.

As clear from the foregoing description, the shrink package according to the present invention employs as a package opening means an inexpensive shrinkable thread which is bonded to the inner surface of a thermally shrinkable film and which is contractable length-wise along with the film by bulging or flexing deformation in radial directions. Accordingly, it becomes unnecessary to use the conventional thermally shrinkable cut tapes which are relatively expensive and require a troublesome operation for attachment to shrink films. Besides, the opener thread is shrinkable commensurate with the degree of shrinkage of the film, there can be produced shrink packages of good appearance free of abnormal tensioning or slackening of the film or thread. Further, easily openable shrink packages can be obtained at a considerably low cost as compared with the conventional shrink packages using cut tapes.

Moreover, according to the packaging method of the invention, a continuous opener thread can be secured to the inner surface of a shrinkable film before wrapping articles therein efficiently by a reduced number of steps to enhance the productivity of shrink packages.

Since there is no need for providing unwrapping perforations in the film, there is no possibility of leakage of expanded air in the shrinking stage or of impairing the appearance of shrink packages.

Claims

1. An easily openable shrink package, characterized by:

a pliable opener yarn or thread (4) securely bonded to an inner surface of a thermally shrinkable film - (2) of said package (1) by means of an adhesive - (7), said opener yarn or thread being shrinkable length-wise in a degree commensurate with the shrinkage of said film by flexing deformations in radial directions.

2. The shrink package of claim 1, characterized in that said opener yarn or thread (4) is constituted by a single yarn or a doubled and twisted yarn in crimped or uncrimped form consisting of staples and/or filaments of natural, synthetic, semi-synthetic or regenerated fiber.

3. The shrink package of claim 1, characterized in that said opener yarn or thread (4) is constituted by a plural number of entwined single yarns or twisted doublings consisting of staples and/or filaments of natural, synthetic, semi-synthetic or regenerated fiber.

4. The shrink package of any of claims 1 to 3, characterized in that said opener yarn or thread (4) is bonded to the inner surface of said thermally shrinkable film (2) at a multitude of discrete points along the length of said opener yarn or thread.

5. The shrink package of any of claims 1 to 4, characterized in that said opener yarn or thread (4) is coextensive with the length of said package (1) and has the opposite ends thereof gripped in transverse seals (6) at the opposite ends of said package.

6. The shrink package of claim 5, characterized in that a pulling end of said opener yarn or thread - (4) is disposed loosely on the outer side of one of said transverse seals (6).

7. The shrink package of any of claims 1 to 5, characterized in that a pulling end of said opener yarn or thread (4) is laid on the inner side of a pull tab (25) formed by cutting a U-shaped slit in said film (2) across said opener yarn or thread.

8. A packaging method for producing an easily openable shrink package, characterized by steps of:

securely bonding a pliable opener yarn or thread - (4) coextensively on one side of a continuous thermally shrinkable film strip (2) in the longitudinal direction thereof:

wrapping an article (3) in said film (4) by folding same into a tubular form:

heat-sealing and cutting said film (4) transversely at positions anterior and posterior to said article to obtain a package of unit length encasing said article (3); and

placing said package in a heating atmosphere to shrink said film.

9. The packaging method of claim 8, characterized in that part of said opener yarn or thread (4) is protruded loosely on the outer side of said thermally shrinkable film (2) before placing said package (1) in said heating atmosphere.

10. The packaging method of claim 8 or 9, characterized in that said opener yarn or thread (4) is bonded to said thermally shrinkable film (2) by a hot melt type adhesive or by heat-sealing.

# F I G. I

# F I G. 2(a)

# F I G. 2(b)

# F I G. 3(a)

# F I G. 3(b)

# FIG. 4

0 209 148

# F I G. 5

# F I G. 6

# FIG. 7

# FIG. 8

# FIG. 9

# FIG. 10